# FASCICULE DE BREVET EUROPEEN

(11) **EP 2 221 231 B1**
(45) Date de publication et mention de la délivrance du brevet: **02.05.2012**
(21) Numéro de dépôt: 09305167.0
(22) Date de dépôt: 20.02.2009
(51) Int. Cl.: B62B 3/18

(54) **Ensemble de transport comprenant un chariot roulant et au moins deux caisses adaptées**
Transporteinheit, die einen Rollwagen und mindestens zwei entsprechend angepasste Behälter umfasst
Transport assembly comprising a trolley and at least two adapted containers

(43) Date de publication de la demande: 25.08.2010
(73) Titulaire: Pierron, François, 57130 Jouy-Aux-Arches (FR)
(72) Inventeur: Pierron, François, 57130 Jouy-Aux-Arches (FR)
(74) Mandataire: Blot, Philippe Robert Emile

(56) Documents cités:
- DE-A1-102004 005 600
- DE-U1- 8 437 285
- DE-U1- 8 914 763
- DE-U1- 9 400 825
- DE-U1- 29 802 557
- DE-U1- 29 811 973
- FR-A- 2 520 216
- FR-A- 2 556 200

## Description

La présente invention concerne en général les chariots roulants utilisés par les clients des supermarchés, pour transporter les produits depuis les rayons jusqu'à la caisse, puis de la caisse jusqu'au véhicule du client.

Plus précisément, l'invention concerne un ensemble de transport, selon le préambule de la revendication 1 tel que celui décrit dans le document DE 10 2004 005 600 A1.

Ces chariots sont commodes, et peuvent recevoir un grand nombre de produits.

Après passage à la caisse du supermarché, les produits sont disposés dans de multiples sachets en plastiques qui doivent être transférés un à un depuis le chariot dans le coffre du véhicule du client. Dans certains cas, le supermarché ne fournit pas de sachets en plastique. Les produits sont alors disposés en vrac dans l'espace de chargement du chariot roulant. Ils doivent être transférés un à un du chariot roulant dans le coffre du véhicule.

De tels transferts ne sont pas commodes pour le client.

Dans ce contexte, l'invention vise à proposer un ensemble de transport qui soit plus commode d'utilisation pour le client.

A cette fin, l'invention porte sur un ensemble de transport selon la revendication 1.

L'ensemble de chariot roulant peut également comporter une ou plusieurs des caractéristiques ci-dessous, considérées individuellement ou selon toutes les combinaisons techniquement possibles :
- l'ensemble comprend une caisse inférieure et une caisse supérieure superposée à la caisse rigide inférieure, les caisses supérieure et inférieure ayant chacune des côtés disposés en vis-à-vis et à moins de cinq centimètres de toutes les parois latérales du chariot roulant ;
- la caisse inférieure présente une ouverture tournée vers le haut, la caisse supérieure comportant un fond présentant un orifice d'accès à la caisse inférieure et une trappe amovible susceptible d'obturer l'orifice d'accès, ledit orifice d'accès étant placé en coïncidence avec l'ouverture de la caisse inférieure ;
- l'ensemble comprend deux caisses inférieures et deux caisses supérieures superposées chacune à une caisse inférieure, les caisses supérieures et inférieures ayant chacune trois côtés disposés en vis-à-vis et à moins de cinq centimètres d'au moins trois parois latérales du chariot roulant ;
- la ou chaque trappe est liée au fond par des moyens de liaison pivot ;
- la ou chaque caisse inférieure et la ou chaque caisse supérieure correspondante présentent des formes choisies pour que la caisse inférieure puisse s'emboîter dans la caisse supérieure correspondante ;
- une des parois latérales du chariot roulant comporte un siège enfant escamotable présentant une position d'utilisation en saillie à l'intérieur de l'espace de chargement, au moins une des caisses présentant un côté mobile disposé en vis-à-vis et à proximité immédiate de ladite paroi latérale, le côté mobile étant déplaçable par rapport aux autres côtés de la caisse entre une position relativement plus proche de ladite paroi latérale et une position relativement plus écartée de ladite paroi latérale ;
- l'espace de chargement présente un volume déterminé, et les caisses occupent ensemble un volume supérieur à 80 % du volume déterminé de l'espace de chargement ;
- au moins deux des parois latérales du chariot roulant sont mobiles, chacune entre une position dressée dans laquelle ladite paroi latérale est sensiblement perpendiculaire au fond, et une position rabattue sur le fond.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en coupe, de côté, d'un ensemble de transport conforme à l'invention ;
- la figure 2 est une vue de dessus de l'ensemble de la figure 1 ;
- la figure 3 est une vue en élévation de l'ensemble de la figure 1 ;
- la figure 4 est une vue similaire à celle de la figure 1, montrant les trappes d'accès aux caisses inférieures en position ouverte ;
- les figures 5 et 6 sont des vues similaires à celles des figures 1 et 4, pour une variante de réalisation de l'invention comportant des moyens pour bloquer les trappes en position ouverte ;
- la figure 7 est une vue similaire à celle de la figure 1, montrant une variante de réalisation de l'invention dans laquelle les caisses ont des sections tronconiques ;
- la figure 8 est une vue similaire à celle de la figure 1, montrant un ensemble dont le chariot comporte un siège enfant et dont une des caisses supérieure comporte une paroi mobile ;
- les figures 9 et 10 illustrent une variante de l'ensemble de la figure 8, dans lesquelles deux des caisses comportent une paroi mobile ;
- la figure 11 est une vue similaire à celle de la figure 2, pour une variante de réalisation dans laquelle ces caisses ont des côtés obliques ; et
- la figure 12 est une vue de côté d'une variante de réalisation de l'invention dans laquelle le chariot a des parois escamotables.

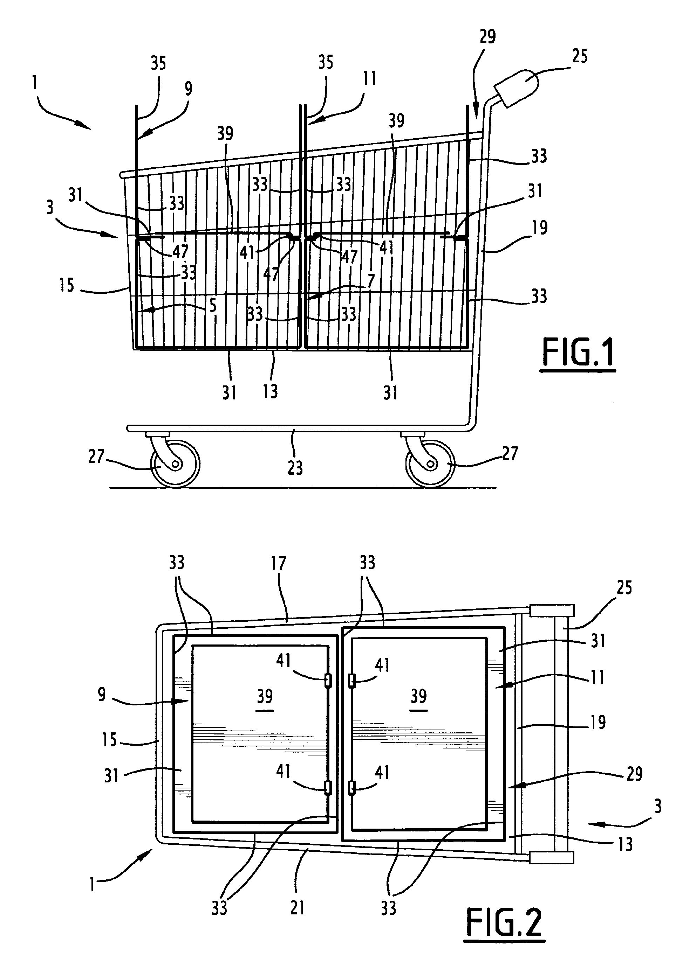

L'ensemble de transport 1 représenté sur les figures 1 à 4 est destiné à être utilisé dans un supermarché. Il est typiquement utilisé par les clients, ceux-ci prélevant les produits qu'ils désirent acheter dans les rayons et les déposant dans l'ensemble de transport. L'ensemble de transport leur sert à transporter ces produits jusqu'à la caisse du supermarché, et depuis la caisse du supermarché jusqu'à leur véhicule.

Comme le montre la figure 1, l'ensemble de transport 1 comporte un chariot roulant 3 et des caisses rigides 5, 7, 9 et 11.

Le chariot roulant 3 comporte un fond 13, quatre parois latérales 15, 17, 19, 21, un support à roulettes 23 et une poignée de préhension 25. Le support à roulettes 23 est rigidement fixé au fond 13. Il est équipé de roulettes 27 permettant de faire rouler le chariot sur le sol.

Le fond 13 et les parois 15 à 21 délimitent entre elles un espace de chargement 29 ouvert vers le haut. Les parois 15 à 21 sont sensiblement perpendiculaires au fond 13, ou sont légèrement évasées vers l'extérieur du chariot à partir du fond 13. La paroi frontale 15 et la paroi arrière 19 sont sensiblement parallèles l'une à l'autre. Les parois 17 et 21 s'écartent légèrement l'une de l'autre, quand on les suit à partir de la paroi 15 vers la paroi 19.

La poignée 25 est rigidement fixée au bord supérieur de la paroi 19.

Les parois latérales du chariot sont de préférence de grande hauteur, par exemple entre 50 cm et 120 cm à partir du fond.

Le chariot 3 est prévu pour être déplacé en étant poussé par le client, par l'intermédiaire de la poignée 25. Il n'est normalement pas motorisé.

Les caisses 5 et 7 sont placées sur le fond 13. La caisse 5 est placée devant la caisse 7. Les caisses 9 et 11 sont placées respectivement au-dessus des caisses 5 et 7 et reposent sur les caisses 5 et 7. La caisse 9 est donc placée devant la caisse 11.

Chaque caisse comporte un fond 31 et quatre côtés 33 se dressant à partir du fond 31.

Dans l'exemple de réalisation des figures 1 à 4, chaque caisse présente des côtés 33 sensiblement perpendiculaires au fond 31. Les côtés 33 sont parallèles deux à deux, les caisses étant parallélépipédiques.

La caisse 5 est disposée de telle sorte que ses quatre côtés 33 soient disposés à proximité immédiate et en vis-à-vis respectivement des parois 15, 17 et 21 du chariot, et d'un côté avant de la caisse 7.

La caisse 7 est disposée de telle sorte que ses quatre côtés 33 soient respectivement à proximité immédiate et en vis-à-vis d'un côté arrière 33 de la caisse 5 et des parois 17, 19 et 21 du chariot.

La caisse 9 est disposée comme la caisse 5, avec ses quatre côtés situés respectivement à proximité immédiate et en vis-à-vis des parois 15, 17 et 21 du chariot et d'un côté avant 33 de la caisse 11.

La caisse 11 est située avec un côté 33 en vis-à-vis et à proximité immédiate d'un côté arrière 33 de la caisse 9 et trois côtés 33 à proximité immédiate et en vis-à-vis des parois 17, 19 et 21 du chariot.

On entend par être situé à proximité immédiate le fait que le côté soit situé à moins de cinq centimètres, de préférence à moins de 2,5 centimètres de la paroi ou du côté, selon le cas. De préférence, chaque côté 33 de la caisse est en tout point à moins de cinq centimètres des parois du chariot et du côté correspondant de la caisse voisine.

Chacune des caisses 5, 7, 9, 11 présente à l'opposé du fond 31, c'est-à-dire vers le haut dans la représentation des figures 1 à 4, une ouverture 35 à travers laquelle il est possible de déposer des produits à l'intérieur de la caisse.

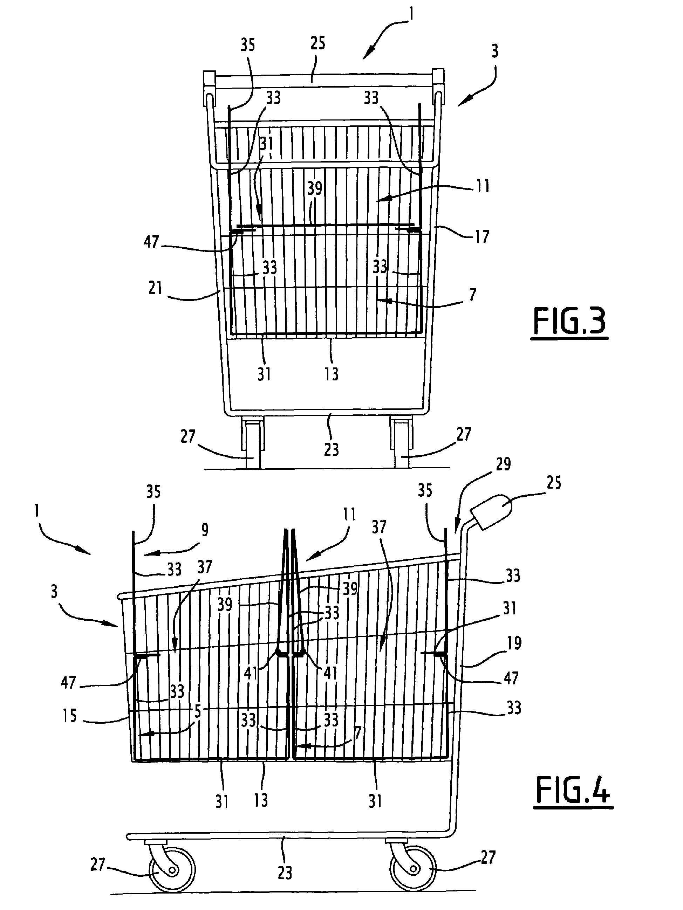

De manière à permettre le chargement des caisses inférieures 5 et 7, les caisses supérieures 9 et 11 comportent chacune un orifice 37 ménagé dans le fond 31, et une trappe amovible 39 susceptible d'obturer l'orifice d'accès 37 (figure 4). L'orifice 37 s'étend sur la plus grande partie du fond 31. Il est placé en coïncidence avec l'ouverture 35 des caisses inférieures.

La trappe 39 est prévue pour obturer complètement l'orifice d'accès 37. Par exemple, la trappe 39 est liée au fond 31 par des moyens de liaison pivot 41.

Pour la caisse 9, les moyens de liaison pivot 41 sont situés à proximité du côté arrière 33, situé à proximité de la caisse 11. Inversement, pour la caisse 11 les moyens de liaison pivot 41 sont situés le long du côté avant, le plus proche de la caisse 9. Les moyens de liaison pivot présentent un axe parallèle aux parois 15 et 19. Les trappes 39 peuvent ainsi basculer entre une position sensiblement horizontale d'obturation de l'orifice d'accès 37, et une position sensiblement verticale de dégagement de l'ouverture d'accès 37. Dans la position de dégagement, comme le montre la figure 4, chaque trappe 39 est dressée contre un côté 33 de la caisse.

Dans cette position, l'utilisateur peut déposer des produits dans les caisses inférieures 5 et 7, à travers les orifices d'accès 37.

Comme apparent sur la figure 2, les caisses 7 et 11 sont respectivement plus grandes que les caisses 5 et 9, du fait que les parois latérales 17 et 21 du chariot sont plus écartées à proximité de la paroi 19 qu'à proximité de la paroi 15.

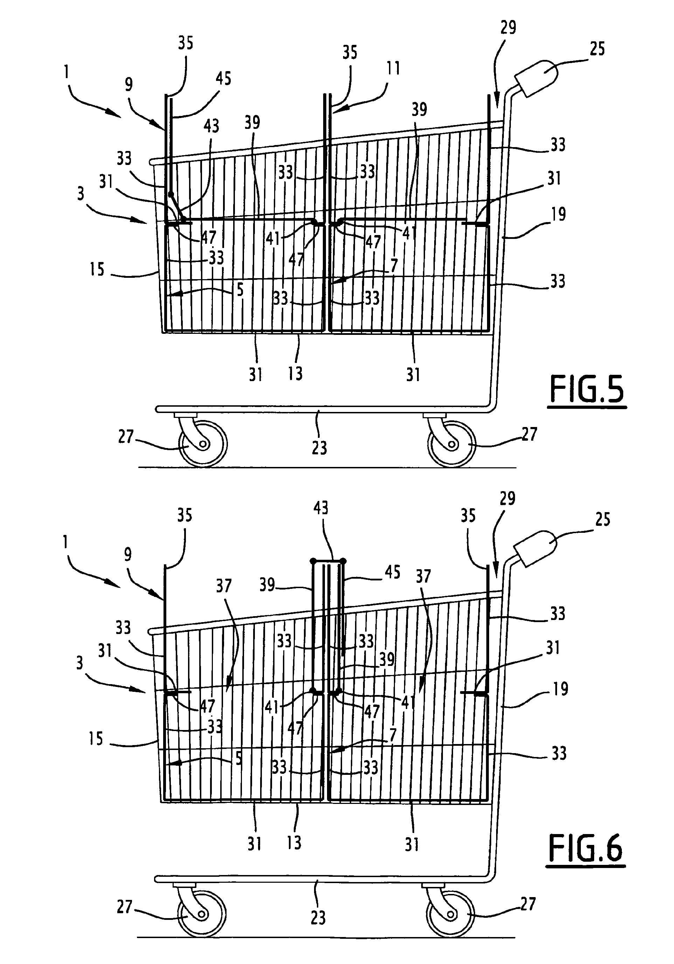

Dans une variante de réalisation représentée sur les figures 5 et 6, l'une des deux caisses supérieures 9 et 11, ici la caisse 9, possède deux volets supplémentaires 43 et 45 articulés à la trappe 39. Le volet 43 est monté pivotant sur un bord de la trappe 39 opposée à la liaison pivot 41. Le volet 45 est monté pivotant sur un bord du volet 43, à l'opposée de la trappe 39. L'axe de pivotement du volet 43 par rapport à la trappe 39, et l'axe de pivotement du volet 45 par rapport au volet 43, sont parallèles à l'axe de pivotement des moyens de liaison 41.

Le volet 43 est de faible largeur, et le volet 45 présente une largeur plus importante que celle du volet 43. On entend par largeur la dimension des volets perpendiculairement aux axes de rotation.

Comme le montre la figure 6, quand les deux trappes 39 des caisses supérieures sont en position ouvertes, le volet 43 peut venir se placer à cheval au-dessus des côtés 33 en vis-à-vis l'un de l'autre des deux caisses supérieures, le volet 45 pendant à l'intérieur de la caisse 11 sous l'effet de son propre poids.

Comme le montre la figure 6, le volet 45 porte contre la trappe 39 de la caisse 11 et l'empêche de se rabattre de manière inopinée. De même, le volet 39 de la caisse 9 ne peut pas se rabattre, du fait que le volet 45 pend à l'intérieur de la caisse 11.

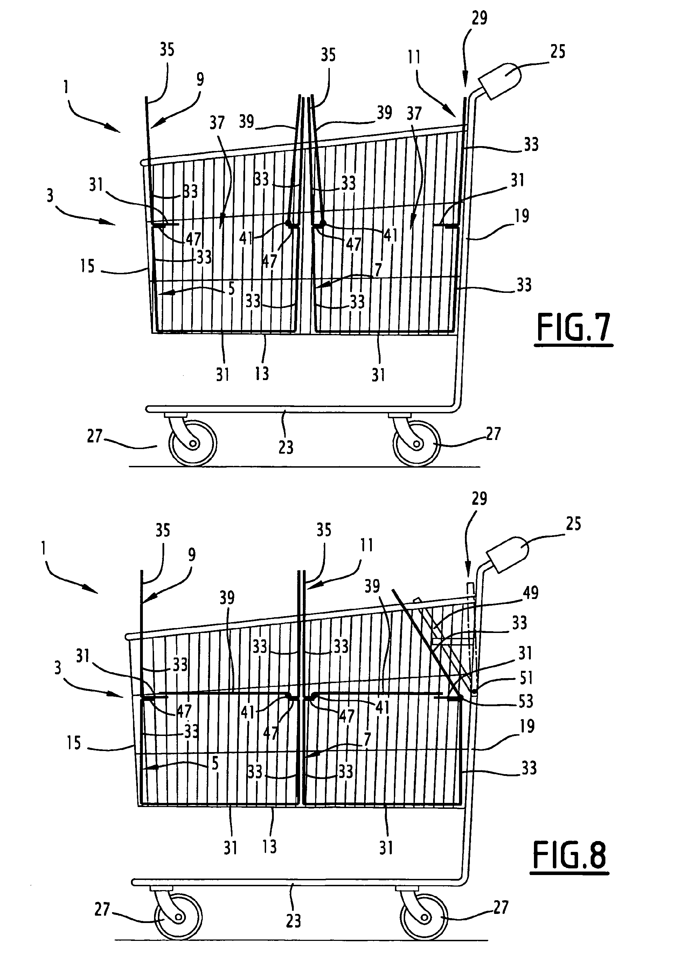

Dans une variante de réalisation représentée sur la figure 7, les côtés 33 des caisses 5 à 11 ne sont pas rigoureusement parallèles deux à deux mais vont en s'évasant légèrement à partir du fond 31. Il est alors possible d'emboîter la caisse inférieure 5 dans la caisse supérieure 9, et la caisse inférieure 7 dans la caisse supérieure 11.

Alternativement, les caisses peuvent comprendre chacune un côté 33 perpendiculaire au fond, destiné à être tourné vers une autre caisse, et trois côtés 33 inclinés par rapport au fond, destinés à être tournés vers les parois du chariot. Ces caisses sont emboîtables les unes aux autres.

De manière à éviter que la caisse 9 tombe dans la caisse 5, ou que la caisse 11 tombe dans la caisse 7, on prévoit autour de l'ouverture 35 des caisses inférieures 5 et 7 une collerette rentrante 47. Les fonds 31 des caisses supérieures 9 et 11 reposent sur les collerettes 47.

Alternativement, il est possible de prévoir que les caisses inférieures 5 et 7 sont de plus petite taille que les caisses supérieures 9 et 11. Plus précisément, il est possible de prévoir que l'ouverture 35 délimitée par les quatre côtés 33 de chacune des caisses 5 et 7 est plus petite que le fond 31 des caisses supérieures 9 et 11. Les fonds 31 des caisses supérieures reposent directement sur les côtés 33 des caisses inférieures.

Dans une variante de réalisation représentée sur la figure 8, la paroi arrière 19 du chariot comporte un siège enfant escamotable 49. Ce siège enfant peut basculer par rapport à la paroi 19 autour d'un axe 51 vers une position d'utilisation en saillie à l'intérieur de l'espace de chargement 29. La position d'utilisation est matérialisée en traits pleins sur la figure 8. L'axe 51 est horizontal et sensiblement parallèle à la paroi 19. Dans sa positon escamotée, matérialisée en traits mixtes sur la figure 8, le siège est plaqué contre la paroi 19 et présente une épaisseur réduite. Dans sa position d'utilisation, le dossier du siège s'étend à partir de l'axe 51 vers le haut et vers la paroi frontale 15.

L'axe 51 s'étend par exemple sensiblement au niveau du fond 31 de la caisse supérieure 11.

De manière à ne pas gêner le déploiement du siège, le côté arrière 33 de la caisse 11, situé en vis-à-vis de la paroi 19, est lui aussi mobile, entre une position relativement plus proche de la paroi 19 et une position relativement plus écartée de la paroi 19. Par exemple, le côté 33 est lié au fond 31 par des moyens de liaison pivot autour d'un axe 53 sensiblement parallèle à l'axe 51. Dans sa position proche de la paroi 19, le côté 33 est sensiblement perpendiculaire au fond 31, ou faiblement incliné par rapport à celui-ci. Dans sa position écartée de la paroi 19, le côté 33 est basculé vers l'intérieur de la caisse 11. Il s'étend vers le haut en s'écartant de la paroi 19 à partir de l'axe 53. Ce basculement permet de dégager un espace pour le débattement du siège enfant 49.

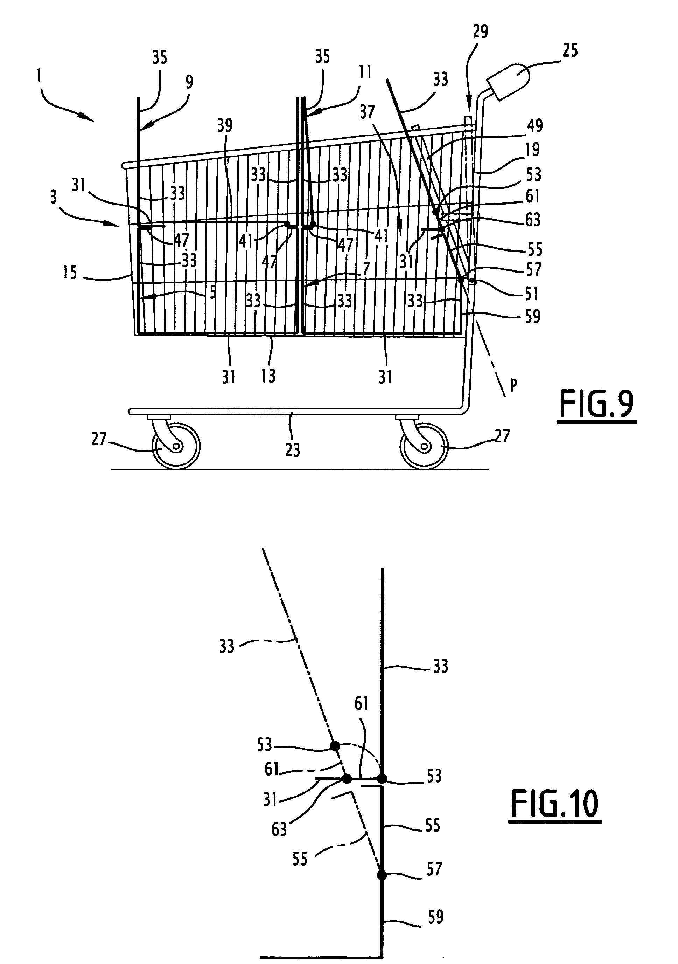

Les figures 9 et 10 illustrent une variante de l'ensemble de transport, dans laquelle l'axe 51 de pivotement du siège enfant est placé en dessous du fond 31 de la caisse 9. L'axe 51 est par exemple placé à mi hauteur de la caisse 7. Dans ce cas, à la fois les caisses 7 et 11 présentent chacune un côté au moins partiellement mobile, déplaçable par rapport aux autres côtés entre une position relativement plus proche de la paroi arrière 19 du chariot et une position relativement plus écartée de ladite paroi 19.

A cet effet, le côté arrière 33 de la caisse 7, tourné vers la paroi 19, comporte un panneau supérieur 55 susceptible de pivoter autour d'un axe 57 par rapport à un panneau inférieur fixe 59 dudit côté. L'axe 57 est sensiblement parallèle à l'axe 51. Dans la position la plus proche de la paroi arrière 19, le panneau 55 est placé dans le même plan que le panneau inférieur 59. Dans la position écartée de la paroi arrière, le panneau 55 est basculé vers l'intérieur de la caisse 7, comme illustré sur la figure 9.

Comme sur la figure 8, le côté arrière 33 de la caisse 11 est articulé au fond 31 autour d'un axe 53. En revanche, le fond 31 comporte une partie mobile 61 articulée autour d'un axe 63 à une partie fixe du fond 31. L'axe 63 est parallèle à l'axe 51. La partie mobile 61 est la partie du fond qui jouxte le côté arrière 33. L'axe 53 lie le côté arrière 33 à la partie mobile 61. Dans la position rapprochée de la paroi arrière 19, la partie mobile 61 est placée dans le même plan que le reste du fond 31. Le côté arrière 33 est placé à proximité de la paroi arrière 19 et est sensiblement parallèle à celle-ci. Dans la position écartée, le côté arrière 33 et la partie mobile 61 sont placés dans le même plan, comme illustré sur les figures 9 et 10. La partie 61 et le côté 33 sont décalés vers l'intérieur de la caisse 11. Ils sont situés dans un plan P passant par l'axe 57. Comme le montre la figure 9, quand la partie 55 est basculée vers l'intérieur de la caisse 7, cette partie 55 est située dans le même plan P.

Les caisses 5, 7, 9 et 11 sont rigides. Elles comportent des poignées (non représentées) permettant au client de les saisir et de les déplacer commodément. Elles sont par exemple constituées d'une matière plastique. Dans ce cas, le fond et les côtés sont pleins ou ajourés. Alternativement, les caisses peuvent être en un treillis de fils métalliques soudés les uns aux autres. Dans ce cas, les côtés et le fond sont ajourés.

Les caisses peuvent également être pliantes, les côtés étant prévus pour se rabattre contre le fond.

Les formes des caisses 5, 7, 9 et 11 sont prévues de manière à s'adapter à la forme de l'espace de chargement du chariot roulant. Ainsi, les côtés des caisses suivent au plus près les parois latérales du chariot roulant. L'interstice entre les côtés des caisses et les parois du chariot est réduit au minimum, et est inférieur à 5 cm, comme indiqué ci-dessus. De préférence, l'interstice est inférieur à 2,5 cm. De cette façon, les caisses occupent ensemble un volume supérieur à 80% du volume de l'espace de chargement. Comme illustré sur les figures 1 à 9, les caisses peuvent même dépasser par le haut de l'espace de chargement. Dans ce cas, les caisses occupent ensemble un volume supérieur à 100% du volume de l'espace de chargement, ce volume étant par exemple supérieur à 110% et valant typiquement 120%. On augmente ainsi la quantité de produits susceptible d'être transportée par l'ensemble de transport. On entend par volume occupé ensemble par les caisses la somme des volumes respectifs occupés par les quatre caisses 5 à 11. Dans tous les cas, le volume est inférieur à 150 % du volume de l'espace de chargement.

Dans une variante de réalisation non représentée sur les figures 1 à 10, l'ensemble de chariot roulant ne contient que deux caisses. L'une des caisses est disposée sur le fond 13 du chariot roulant. L'autre caisse est disposée au-dessus de la caisse inférieure et est en appui sur celle-ci. Comme précédemment, le fond de la caisse supérieur présente un orifice d'accès à la caisse inférieur, et une trappe amovible susceptible d'obturer l'orifice d'accès. La caisse inférieure occupe un volume correspondant sensiblement à celui des caisses 5 et 7. La caisse supérieure occupe un volume correspondant sensiblement au volume des caisses 9 et 11.

Le client, quand il fait ses courses dans un supermarché, place d'abord les trappes 39 en position ouverte et remplit d'abord les caisses inférieures 5 et 7 avec les produits qu'il veut acheter. Une fois les caisses inférieures remplies, il remplit les caisses supérieures 9 et 11.

Arrivé à la caisse, il vide d'abord les caisses supérieures puis les caisses inférieures. Après avoir payé, il replace les produits à l'intérieur des caisses inférieures. Puis il referme les trappes 39 et remplit les caisses supérieures. Il pousse ensuite l'ensemble de transport jusqu'à son véhicule. Il saisit ensuite chacune des caisses et les places dans le coffre de son véhicule. Les caisses ne sont pas fixées les unes aux autres, et ne sont pas fixées au chariot roulant. Elles peuvent être librement disposées dans l'espace de chargement du chariot roulant, ou retirées de cet espace de chargement pour être placé dans le coffre.

Le transfert des produits du chariot roulant vers le coffre du véhicule est donc particulièrement simple.

Dans le cas où les caisses sont pliantes, le client peut placer les caisses à l'état plié dans le chariot et remplir celui-ci avec des produits. Arrivé à la caisse, il sort les produits du chariot, déploie les caisses et place les caisses inférieures dans le chariot. Il remplit les caisses inférieures avec des produits déjà payés, puis place les caisses supérieures sur les caisses inférieures. Enfin, il remplit les caisses supérieures. Les caisses ne servent dont qu'après le passage à la caisse de paiement du supermarché.

L'invention a été décrit un chariot roulant et deux ou quatre caisses. L'ensemble de chariot pourrait comprendre un nombre de caisses différentes de 2 ou 4. Par exemple, il pourrait comporter deux niveaux de trois caisses chacun, ou quatre caisses chacun etc...Il est envisageable de prévoir plus de deux niveaux, par exemple trois niveaux ou plus.

Il est également possible, selon une variante qui ne fait pas partie de l'invention, de prévoir un seul niveau de caisse, avec par exemple deux caisses disposées côte à côte.

Dans le cas d'un ensemble de transport avec deux caisses par niveau, les côtés 33 des deux caisses situées en vis-à-vis l'une de l'autre peuvent être escamotables, de manière à mettre en communication les volumes internes des deux caisses. Par exemple, ces côtés sont pivotants par rapport au fond de la caisse, autour d'un axe sensiblement perpendiculaire au fond de chaque caisse.

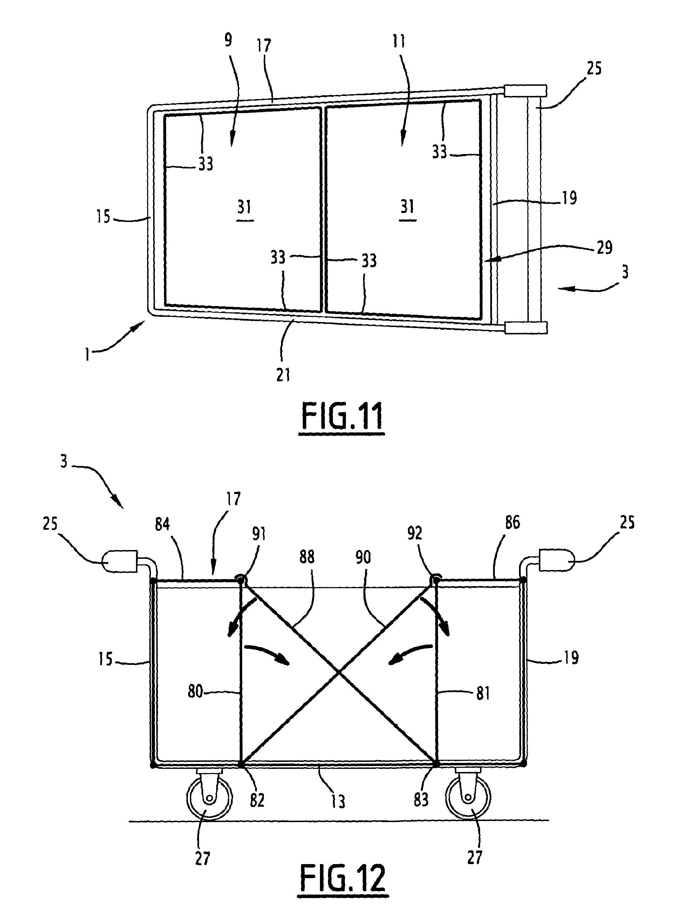

Les côtés des caisses situés le long des parois latérales 17 et 21 du chariot peuvent ne pas être parallèles entre eux, mais plutôt être parallèles aux parois latérales 17 et 21 comme illustré sur la figure 11.

Les caisses peuvent être équipées de moyens tels que des crochets amovibles, permettant de les fixer les unes aux autres, et de les fixer au chariot.

Les caisses peuvent être dépourvues de trappes 39, les fonds des caisses étant fixes (voir figure 11) selon une variante qui ne fait pas partie de l'invention.

Les caisses peuvent être équipées de roulettes, fixées aux fonds des caisses, permettant de faire rouler les caisses sur le sol.

Le chariot peut être motorisé ou dépourvu de moteur.

Dans une variante de réalisation représentée sur la figure 12, le chariot comporte des parois latérales escamotables. Par exemple, les parois latérales frontale 15 et arrière 19 sont chacune mobile par pivotement par rapport au fond 13. Elles sont chacune mobile entre une position dressée (figure 12) dans laquelle elle est sensiblement perpendiculaire au fond, et une position rabattue sur le fond 13 (non représentée)

Les parois latérales 17 et 21 comprennent par exemple chacune deux montants verticaux 80 montés sur le fond 13 par les pivots 82, 83, deux barres horizontales 84, 86, et deux barres obliques 88, 90. Chaque barre horizontale 80, 82 est reliée par des pivots à l'un des montants verticaux 80, 82 et à l'une des parois 15 ou 19.

On forme ainsi deux parallélogrammes déformables (montant 80, barre 84, paroi 15 ; montant 82, barre 86, paroi 19).

La barre oblique 88 relie le pivot 83 au pivot 91 liant le montant 80 à la barre 84. La barre 90 relie le pivot 82 au pivot 92 reliant le montant 81 à la barre 86.

Les barres obliques 88 et 90 bloquent les parois 17 et 21 en positions dressées. Elles sont prévues pour pouvoir être désolidarisées respectivement des pivots 91 et 92. Les parois 15 et 19 peuvent alors se rabattre en position escamotée. Les barres obliques 88 et 90 peuvent alors également se rabattre sur le fond 13.

Le mouvement des parois 15 et 19 entraîne la déformation des deux parallélogrammes déformables (15, 80, 84 ; 19, 81, 86).

Le chariot comporte avantageusement deux poignées 25, solidaires l'une de la paroi 15 et l'autre de la paroi 19.

Dans une variante de réalisation de l'invention non représentée, les parties des caisses qui dépassent au-dessus des parois du chariot peuvent porter des marquages publicitaires ou des panneaux publicitaires amovibles ou fixes. Ces parties peuvent également porter des pochettes prévues pour recevoir des prospectus publicitaires à emporter par le client.

Dans une variante de réalisation non représentée, les parois 17 et 21 sont autobloquantes. Le chariot comporte un mécanisme apte à bloquer de manière réversible les parois 17 et 21 en positions dressées, par exemple agencé au niveau des axes d'articulation des parois 17 et 21 au fond 13. Dans ce cas, les barres obliques 88 et 90 ne sont plus nécessaires.

## Revendications

1. Ensemble de transport, l'ensemble (1) comprenant un chariot roulant (3) comportant au moins un fond (13) et des parois latérales (15, 17, 19, 21), le fond (13) et les parois latérales (15, 17, 19, 21) délimitant un espace de chargement (29) prévu pour recevoir des produits, l'ensemble (1) comprenant au moins deux caisses (5, 7, 9, 11) susceptibles d'être disposées dans l'espace de chargement (29), les caisses (5, 7, 9, 11) présentant des côtés (33) disposés en vis-à-vis et à moins de cinq centimètres de toutes les parois latérales (15, 17, 19, 21) du chariot roulant (3), **caractérisé en ce qu'**il comprend au moins une caisse inférieure (5, 7) et au moins une caisse supérieure (9, 11), la ou chaque caisse supérieure étant superposée à une caisse inférieure (5, 7), les caisses supérieures (9, 11) et inférieures (5, 7) ayant des côtés (33) disposés en vis-à-vis et à moins de cinq centimètres de toutes les parois latérales (15, 17, 19, 21) du chariot roulant (3),
chaque caisse inférieure (5, 7) présentant une ouverture (35) tournée vers le haut, la caisse supérieure (9, 11) correspondante comportant un fond (31) présentant un orifice d'accès (37) à ladite caisse inférieure (5, 7) et une trappe (39) amovible susceptible d'obturer l'orifice d'accès (37), ledit orifice d'accès (37) étant placé en coïncidence avec l'ouverture (35) de ladite caisse inférieure (5, 7).

2. Ensemble selon la revendication 1, **caractérisé en ce qu'**il comprend une caisse inférieure et une caisse supérieure superposée à la caisse rigide inférieure, les caisses supérieure et inférieure ayant chacune des côtés (33) disposés en vis-à-vis et à moins de cinq centimètres de toutes les parois latérales (15, 17, 19, 21) du chariot roulant (3).

3. Ensemble selon la revendication 2, **caractérisé en ce que** la caisse inférieure présente une ouverture (35) tournée vers le haut, la caisse supérieure comportant un fond (31) présentant un orifice (37) d'accès à la caisse inférieure et une trappe (39) amovible susceptible d'obturer l'orifice d'accès (37), ledit orifice d'accès (37) étant placé en coïncidence avec l'ouverture (35) de la caisse inférieure.

4. Ensemble selon la revendication 1, **caractérisé en ce qu'**il comprend deux caisses inférieures (5, 7) et deux caisses supérieures (9, 11) superposées chacune à une caisse inférieure (5, 7), les caisses supérieures (9, 11) et inférieures (5, 7) ayant chacune trois côtés (33) disposés en vis-à-vis et à moins de cinq centimètres d'au moins trois parois latérales (15, 17, 19, 21) du chariot roulant (3).

5. Ensemble selon la revendication 4, **caractérisé en ce que** chaque caisse inférieure (5, 7) présente une ouverture (35) tournée vers le haut, la caisse supérieure (9, 11) correspondante comportant un fond (31) présentant un orifice d'accès (37) à ladite caisse inférieure (5, 7) et une trappe (39) amovible susceptible d'obturer l'orifice d'accès (37), ledit orifice d'accès (37) étant placé en coïncidence avec l'ouverture (35) de ladite caisse inférieure (5, 7).

6. Ensemble selon la revendication 3 ou 5, **caractérisé en ce que** la ou chaque trappe (39) est liée au fond (31) par des moyens de liaison pivot (41).

7. Ensemble selon l'une quelconque des revendications 2 à 6, **caractérisé en ce que** la ou chaque caisse inférieure (5, 7) et la ou chaque caisse supérieure (9, 11) correspondante présentent des formes choisies pour que la caisse inférieure (5, 7) puisse s'emboîter dans la caisse supérieure (9, 11) correspondante.

8. Ensemble selon l'une quelconque des revendications précédentes, **caractérisé en ce qu'**une des parois latérales (19) du chariot roulant (3) comporte un siège enfant (49) escamotable présentant une position d'utilisation en saillie à l'intérieur de l'espace de chargement (29), au moins une des caisses (7, 11) présentant un côté (33) mobile disposé en vis-à-vis et à proximité immédiate de ladite paroi latérale (19), le côté mobile (33) étant déplaçable par rapport aux autres côtés (33) de la caisse (7, 11) entre une position relativement plus proche de ladite paroi latérale (19) et une position relativement plus écartée de ladite paroi latérale (19).

9. Ensemble selon l'une quelconque des revendications précédentes, **caractérisé en ce que** l'espace de chargement (23) présente un volume déterminé, et les caisses (5, 7, 9, 11) occupent ensemble un volume supérieur à 80 % du volume déterminé de l'espace de chargement (29).

10. Ensemble selon l'une quelconque des revendications précédentes, **caractérisé en ce que** au moins deux des parois latérales (15, 17, 19, 21) du chariot roulant (3) sont mobiles, chacune entre une position dressée dans laquelle ladite paroi latérale (15, 17, 19, 21) est sensiblement perpendiculaire au fond (13), et une position rabattue sur le fond (13).

## Claims

1. A transport assembly, the assembly (1) comprising a movable trolley (3) including at least one bottom (13) and side walls (15, 17, 19, 21), the bottom (13) and the side walls (15, 17, 19, 21) delimiting a loading space (29) intended to receive products, the assembly (1) comprising at least two boxes (5, 7, 9, 11) that can be positioned in the loading space (29), the boxes (5, 7, 9, 11) having sides (33) positioned opposite each other and less than five centimeters from all of the side walls (15, 17, 19, 21) of the movable trolley (3), **characterized in that** it comprises at least one lower box (5, 7) and at least one upper box (9, 11), the or each upper box being superimposed on a lower box (5, 7), the upper (9, 11) and lower (5, 7) boxes having sides (33) positioned opposite one another and less than five centimeters from all of the side walls (15, 17, 19, 21) of the movable trolley (3),
each lower box (5, 7) having an opening (35) facing upward, the corresponding upper box (9, 11) including a bottom (31) with an access opening (37) for accessing said lower box (5, 7) and a removable hatch (39) capable of covering the access opening (37), said access opening (37) being placed to coincide with the opening (35) of said lower box (5, 7).

2. The assembly according to claim 1, **characterized in that** it comprises a lower box and an upper box superimposed on the lower rigid box, the upper and lower boxes each having sides (33) positioned opposite one another and at least five centimeters from all of the side walls (15, 17, 19, 21) of the movable trolley (3).

3. The assembly according to claim 2, **characterized in that** the lower box has an opening (35) facing upward, the upper box including a bottom (31) having an access opening (37) for accessing the lower box and a removable hatch (39) capable of covering the access opening (37), said access opening (37) being placed to coincide with the opening (35) of the lower box.

4. The assembly according to claim 1, **characterized in that** it comprises two lower boxes (5, 7) and two upper boxes (9, 11) each superimposed on a lower box (5, 7), the upper (9, 11) and lower (5, 7) boxes each having three sides (33) positioned opposite each other and less than five centimeters from at least three side walls (15, 17, 19, 21) of the moveable trolley (3).

5. The assembly according to claim 4, **characterized in that** the lower box (5, 7) has an opening (35) facing upward, the corresponding upper box (9, 11) including a bottom (31) having an access opening (37) for accessing said lower box (5, 7) and a removable hatch (39) capable of covering the access opening (37), said access opening (37) being placed to coincide with the opening (35) of said lower box (5, 7).

6. The assembly according to claim 3 or 5, **characterized in that** the or each hatch (39) is connected to the bottom (31) by pivoting connecting means (41).

7. The assembly according to any one of claims 2 to 6, **characterized in that** the or each lower box (5, 7) and the or each corresponding upper box (9, 11) have shapes chosen so that the lower box (5, 7) can fit into the corresponding upper box (9, 11).

8. The assembly according to any one of the preceding claims, **characterized in that** one of the side walls (19) of the movable trolley (3) includes a retractable child seat (49) having a usage position protruding inside the loading space (29), at least one of the boxes (7, 11) having a movable side (33) arranged opposite and in the immediate vicinity of said side wall (19), the movable side (33) being able to move relative to the other sides (33) of the box (7, 11) between a position relatively closer to said side wall (19) and a position relatively further from said side wall (19).

9. The assembly according to any one of the preceding claims, **characterized in that** the loading space (23) has a predetermined volume, and the boxes (5, 7, 9, 11) together occupy a volume of more than 80% of the predetermined volume of the loading space (29).

10. The assembly according to any one of the preceding claims, **characterized in that** at least two of the side walls (15, 17, 19, 21) of the moveable trolley (3) can be moved, each between an upright position in which said side wall (15, 17, 19, 21) is substantially perpendicular to the bottom (13), and a position folded down on the bottom (13).

## Patentansprüche

1. Transporteinheit, wobei die Einheit (1) einen rollenden Wagen (3) umfasst, umfassend mindestens einen Boden (13) und seitliche Wände (15, 17, 19, 21), wobei der Boden (13) und die seitlichen Wände (15, 17, 19, 21) einen Laderaum (29) begrenzen, der vorgesehen ist, um Produkte aufzunehmen, wobei die Einheit (1) mindestens zwei Kästen (5, 7, 9, 11) umfasst, die im Laderaum (29) angebracht werden können, wobei die Kästen (5, 7, 9, 11) Seiten (33) aufweisen, die gegenüber und mindestens fünf Zentimeter entfernt von allen seitlichen Wänden (15, 17, 19, 21) des rollenden Wagens (3) angebracht sind, **dadurch gekennzeichnet dass** sie mindestens einen unteren Kasten (5, 7) und mindestens einen oberen Kasten (9, 11) umfasst, wobei der oder jeder obere Kasten (9, 11) über einen unteren Kasten (5, 7) gestellt ist, wobei die oberen (9, 11) und unteren (5, 7) Kästen Seiten (33) aufweisen, die gegenüber und mindestens fünf Zentimeter entfernt von allen seitlichen Wänden (15, 17, 19, 21) des rollenden Wagens (3) angeordnet sind,
wobei jeder untere Kasten (5, 7) eine Öffnung (35) aufweist, die nach oben gerichtet ist, wobei der entsprechende obere Kasten (9, 11) einen Boden (31) umfasst, der eine Zugangsöffnung (37) zum unteren Kasten (5, 7) und einen abnehmbaren Deckel (39) aufweist, der die Zugangsöffnung (37) verschließen kann, wobei die Zugangsöffnung (37) deckungsgleich mit der Öffnung (35) des unteren Kastens (5, 7) angebracht ist.

2. Einheit nach Anspruch 1, **dadurch gekennzeichnet, dass** sie einen unteren Kasten und einen oberen Kasten umfasst, der über den starren unteren Kasten gestellt ist, wobei der obere und der unteren Kasten jerweils Seiten (33) aufweisen, die gegenüber und mindestens fünf Zentimeter entfernt von allen seitlichen Wänden (15, 17, 19, 21) des rollenden Wagens (3) angebracht sind.

3. Einheit nach Anspruch 2, **dadurch gekennzeichnet, dass** der untere Kasten eine Öffnung (35) aufweist, die nach oben gerichtet ist, wobei der obere Kasten einen Boden (31) umfasst, der eine Zugangsöffnung (37) zum unteren Kasten und einen abnehmbaren Deckel (39) aufweist, der die Zugangsöffnung (37) verschließen kann, wobei die Zugangsöffnung (37) deckungsgleich mit der Öffnung (35) des unteren Kastens angebracht ist.

4. Einheit nach Anspruch 1, **dadurch gekennzeichnet, dass** sie zwei untere Kästen (5, 7) und zwei obere Kästen (9, 11) umfasst, die jeweils über einen unteren (5, 7) Kasten gestellt sind, wobei die oberen (9, 11) und unteren (5, 7) Kästen jeweils drei Seiten (33) aufweisen, die gegenüber und mindestens fünf Zentimeter von mindestens drei seitlichen Wänden (15, 17, 19, 21) des rollenden Wagens (3) angebracht sind.

5. Einheit nach Anspruch 4, **dadurch gekennzeichnet, dass** jeder untere Kasten (5, 7) eine Öffnung (35) aufweist, die nach oben gerichtet ist, wobei der entsprechende obere Kasten (9, 11) einen Boden (31) umfasst, der eine Zugangsöffnung (37) zum unteren Kasten (5, 7) und einen abnehmbaren Deckel (39) ausweist, der die Zugangsöffnung (37) verschließen kann, wobei die Zugangsöffnung (37) deckungsgleich mit der Öffnung (35) des unteren Kastens (5, 7) angebracht ist.

6. Einheit nach Anspruch 3 oder 5, **dadurch gekennzeichnet**, das der oder jeder Deckel (39) am Boden (31) mit Mitteln zur Drehverbindung (41) verbunden ist.

7. Einheit nach einem der Ansprüche 2 bis 6, **dadurch gekennzeichnet, dass** der oder jeder untere Kasten (5, 7) und der oder jeder entsprechende obere Kasten (9, 11) Formen aufweist, die ausgewählt sind, damit der untere Kasten (5, 7) in den entsprechenden oberen Kasten (9, 11) eingeschoben werden kann.

8. Einheit nach einem der vorhergehenden Ansprüche, **dadurch gekennzeichnet, dass** eine der seitlichen Wände (19) des rollenden Wagens (3) einen versenkbaren Kindersitz (49) umfasst, der eine Verwendungsposition aufweist, die in aus dem Inneren des Laderaums (29) ragt, wobei mindestens einer der Kästen (7, 11) eine bewegliche Seite (33) aufweist, die gegenüber und in unmittelbarer Nähe der seitlichen W and (19) angeordnet ist, wobei die bewegliche Seite (33) mit Bezug auf die anderen Seiten (33) des Kastens (7, 11) zwischen einer Position, die verhältnismäßig näher an der seitlichen W and (19) ist, und einer Position, die verhältnismäßig weiter von der seitlichen Wand (19) entfernt ist, verschoben werden kann.

9. Einheit nach einem der vorhergehenden Anspruche, **dadurch gekennzeichnet, dass** der Laderaum (23) ein bestimmtes Volumen aufweist und die Kästen (5, 7, 9, 11) zusammen ein Volumen einnehmen, das größer als 80 % des bestimmten Volumens des Laderaums (29) ist.

10. Einheit nach einem der vorhergehenden Ansprüche, **dadurch gekennzeichnet, dass** mindestens zwei der seitlichen Wände (15, 17, 19, 21) des rollenden Wagens (3) bewegliche sind, jede zwischen einer aufgerichteten Postition, in der die seitliche Wand (15, 17, 19, 21) im Wesentlichen senkrecht zum Boden (13) ist, und einer auf den Boden (13) heruntergeklappten Position.
